# EUROPÄISCHE PATENTSCHRIFT

(11) **EP 1 208 937 B1**
(45) Veröffentlichungstag und Bekanntmachung des Hinweises auf die Patenterteilung: **19.06.2002**
(21) Anmeldenummer: 00811096.7
(22) Anmeldetag: 17.11.2000
(51) Int. Cl.: B23Q 1/00

(54) **Steckspannkupplung**
Tensioned snap-on coupling
Raccord encliquetable sous tension

(43) Veröffentlichungstag der Anmeldung: 29.05.2002
(73) Patentinhaber: Good, Johann, CH-8887 Mels (CH)
(72) Erfinder: Good, Johann, CH-8887 Mels (CH)

(56) Entgegenhaltungen:
- EP-A- 1 048 397
- DE-A- 3 817 109
- DE-A- 4 135 418
- US-A- 5 918 870
- US-A- 6 073 325
- US-A- 6 145 824

## Beschreibung

Bei bekannten Steckspannkupplungen, beispielsweise gemäß US-A-6 073 325, wird in der Regel mit hydraulischer Kraft (von 60 - 100 bar) ein Tellerfederpaket vorgespannt. Nachteilig ist bei diesen Produkten, dass sie zusätzlich teure hydraulische Aggregate benötigen und die Installationen viel aufwendiger und komplexer sind. Zudem sind diese Produkte im gekoppelten Zustand nur über das Tellerfederpaket vorgespannt. Weiter sind die Spannkugeln im entkoppelten Zustand offengelegt, und deshalb nicht vor Verschmutzung geschützt, was zu Betriebsstörungen führen kann.

Es ist daher Aufgabe der vorliegenden Erfindung, eine Steckspannkupplung nach Anspruch 1 zu schaffen, welche eine kraftvolle Spannung durch ein Druckfederpaket (8) über einen Konus (21) im Ringspannkolben (7) erzeugt, und somit die Andockplatte einer Andockeinheit (13) mit dem angeschraubten Spannzapfen (12) über die Spannkugeln (10) formschlüssig verbindet und mechanisch verriegelt. Durch Zuführen von Druckluft von 6 - 7 bar in den Ringzylinderraum (6) wird die Andockeinheit (13) sekundenschnell entkuppelt. Durch das Herausziehen der Andockeinheit (13), wird die Steckspannkupplung automatisch über die Schliessfeder (15) durch die Schliesskolbenbüchse (14) und durch den O-Ring (23) in der Bohrung (24) der Kugelspannbüchse (4) abgedichtet. Die einfache Konstruktion erlaubt, dass sämtliche Innenteile im Gehäuse (1) durch den Abschlussdeckel (5) zentriert und durch Verbinden mit den Schrauben (32) abgestützt werden. Dadurch entsteht eine kompakte Steckspannkupplung, welche auf engem Raum gebaut wird und sehr leicht montierbar ist.

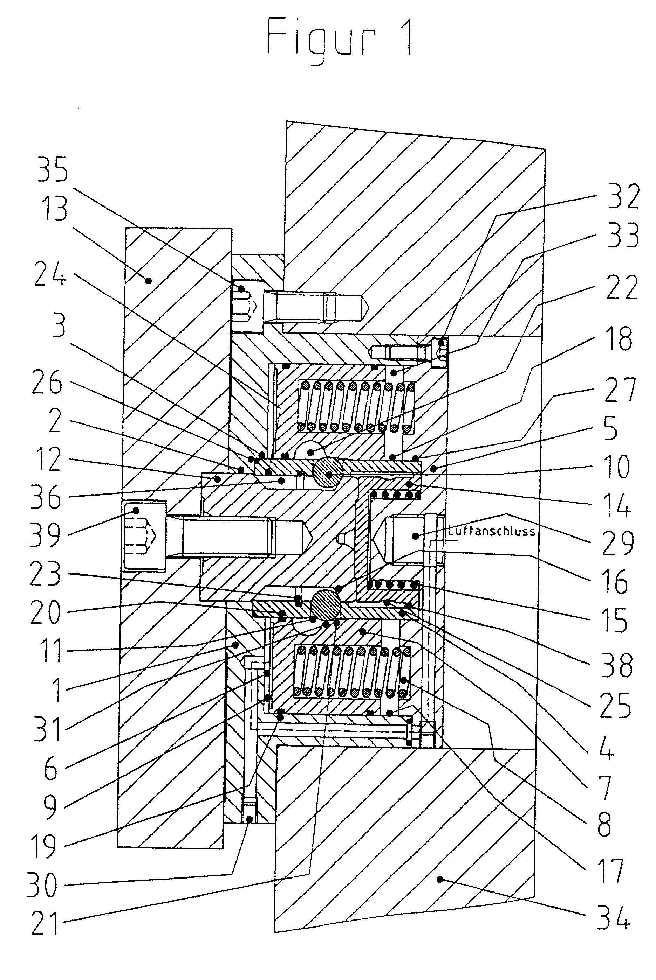

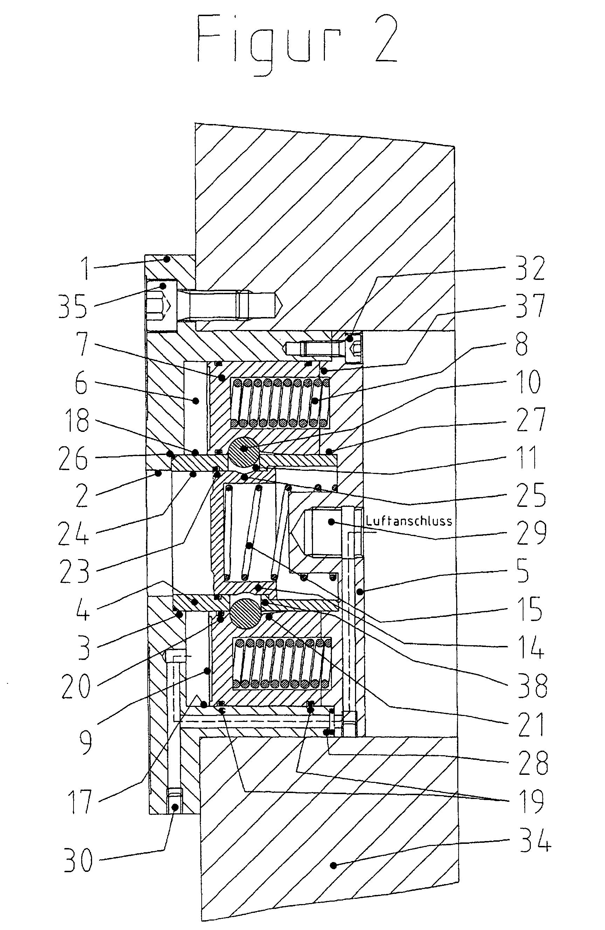

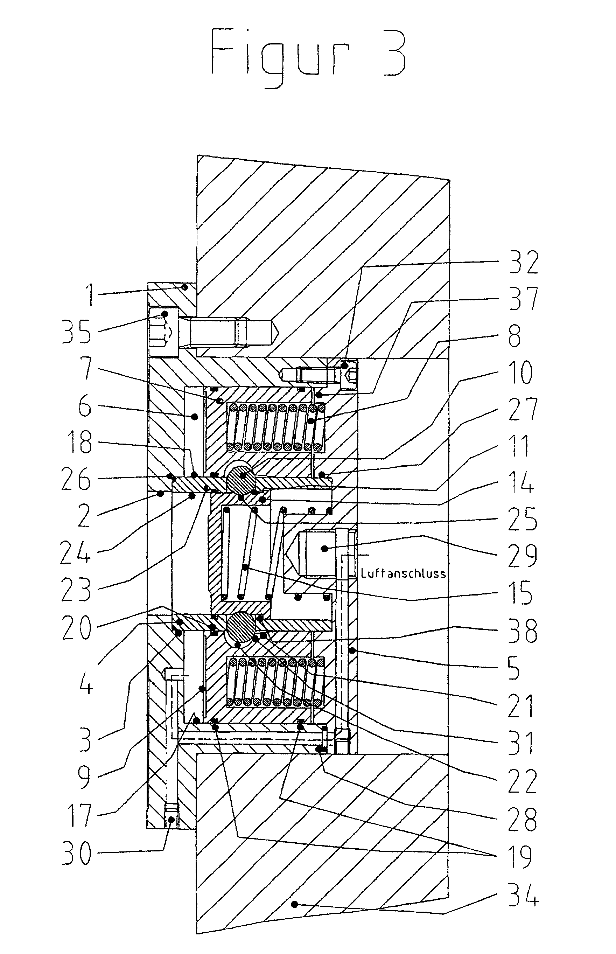

Speziell zu erwähnen ist, dass diese Steckspannkupplung in allen Lagen ein- und aufgebaut werden kann, und somit die Einsatzmöglichkeiten fast unbeschränkt sind. Da die Spannkraft über ein Druckfederpaket (8) wirkt, kann sie auch auf Rotationsmaschinen problemlos eingesetzt werden Die Ausbildungsmerkmale, welche diese Aufgabe ermöglichen, sind der folgenden Beschreibung und den Patentansprüchen zu entnehmen. Die Ausführungsbeispiele der Erfindung sind in den Zeichnungen Fig. 1 bis Fig. 3 dargestellt:
- Fig. 1: Steckspannkupplung mit verschraubtem Spannzapfen (12), an der Andockplatte (13), in gekuppeltem Zustand im Schnitt.
- Fig. 2: Steckspannkupplung im entkuppeltem und druckbeaufschlagtem Zustand mit vorgespanntem Druckfederpaket (8) und geschlossener und abgedichteter Schliesskolbenbüchse (14) im Schnitt.
- Fig. 3: Im entkuppelten und druckluftlosem Zustand wird die Schliesskolbenbüchse (14) durch die Schliesskraft der Schliessfeder (15) über die Spannkugeln (10) gespannt und verriegelt (im Schnitt).

In einem einsatzgehärteten Zylindergehäuse (1) mit integrierter Zylinderbohrung (2) sowie einer Versatzbohrung (3), in welcher eine Kugelspannbüchse (4) eingeschoben ist, die stirnseitig durch den O-Ring (26) abgedichtet wird und auf der Rückseite in der Bohrung (27) vom Abschlussdeckel (5) zentriert, welcher in der Zylinderbohrung (17) zentriert ist sowie durch die Schrauben (32) verbunden ist. Dadurch entsteht ein geschlossener Ringzylinderraum (6), welcher durch den schwimmenden Ringspannkolben (7) in den Ringzylinderraum (6) und den Druckfederraum (33) aufgeteilt wird. Der Ringzylinderraum (6) ist durch den O-Ring (26) in der Kugelspannbüchse (4) und den O-Ringen (19 und 20) im Ringkolben (7) abgedichtet.

Im Ringspannkolben (7) ist ein Druckfederpaket (8) gelagert, das dieses in luftdrucklosem Zustand achsial nach unten schiebt und die in der Ringkammer (22) befindenden Spannkugeln (10) über den Konus (21) mit erhöhter Kraft durch die in der Kugelspannbüchse (4) radial angeordneten Kugelbohrungen (11) unter den Spannzapfenhals (16) drückt und diese unten an den Kugelbohrungen (11) abgestützt werden und dadurch die Andockplatte (13) mit verschraubtem Spannzapfen (12) mit der Steckspannkupplung formschlüssig verbindet und verriegelt. Bei druckluftbeaufschlagtem Ringspannkolben (7) (6-7 bar) wird dieser achsial in die oberste Stellung gedrückt und dadurch das Druckfederpaket (8) auf den nächsten Schliessprozess vorgespannt und gleichzeitig werden die Spannkugeln (10) entlastet. Durch Herausziehen des Spannzapfens (12) mit der Andockplatte (13) werden die Spannkugeln (10) wieder in die freistehende Ringkammer (22) zurückgeschoben und gleichzeitig die vorgespannte Schliesskolbenbüchse (14) in die Bohrung (24) der Kugelspannbüchse (4) gedrückt, wodurch die Spannkugeln (10) abgedeckt und gesichert sind, und das Gehäuse (1) durch den O-Ring (23) abgedichtet wird. Durch das Abschalten der Druckluft wird der Ringspannkolben (7) wieder achsial nach unten geschoben und die Spannkugeln (10) über die 45° Facette (31) in die Rille (25) der Schliesskolbenbüchse (14) gedrückt und dadurch diese mechanisch verriegelt.

## Patentansprüche

1. Steckspannkupplung zum Spannen einer Andockeinheit, mit einem Gehäuse (1), welches eine Zentrierbohrung (2), eine Zylinderbohrung (17) sowie eine Versatzbohrung (3) aufweist, in welche eine Kugelspannbüchse (4), mit im Kreis angeordneten Kugelspannbohrungen (11) für Spannkugeln (10), eingeschoben ist und an der Rückseite mit einem Abschlussdeckel (5) zentriert und verbunden ist, wodurch ein geschlossener Zylinderraum (6) entsteht, in welchem ein Ringspannkolben (7), mit integriertem Druckfederpaket (8) als Antriebsorgan, schwimmend gelagert ist, wobei der Ringspannkolben (7) bei Beaufschlagung mit Druckluft in die obere Endstellung drückbar ist und dadurch das Druckfederpaket (8) auf die Schliesskraft vorspannt und beim Abschalten der Druckluft die Schliesskraft aktiviert und somit einen zu kuppelnden Spannzapfen (12) einer Andockplatte (13) der Andockeinheit mit einem Konus (21) am Ringspannkolben (7) über die Spannkugeln (10) mit dem Gehäuse (1) formschlüssig verbindet; mit einer Schliesskolbenbüchse (14), wobei die Schliesskolbenbüchse (14) mit einer Rille (25) im entkuppelten und drucklosen Zustand durch die Schliesskraft einer Schliessfeder (15) und der Facette (31) am Konus (21) des Ringspannkolbens (7) und den Spannkugeln (10) verriegelbar ist, und die Schliesskolbenbüchse (14) im entkuppelten und druckluftbeaufschlagtem Zustand durch eine vorgespannte Schliessfeder (15) in der Bohrung (24) der Kugelspannbüchse (4) schiebbar ist und dadurch die Spannkugeln (10) gesichert sind.

2. Steckspannkupplung nach Anspruch 1, **dadurch gekennzeichnet, dass** der Ringspannkolben (7) im Ringzylinderraum (6) über O-Ringe (19,20,26) gelagert und abgedichtet ist.

3. Steckspannkupplung nach Anspruch 1 oder 2, **dadurch gekennzeichnet, dass** der schwimmende Ringspannkolben (7) die Spannkraft über den Konus (21) und die Spannkugeln (10) konzentrisch auf den Spannzapfen (12) überträgt.

4. Steckspannkupplung nach einem der Ansprüche 1 bis 3, **dadurch gekennzeichnet, dass** das Druckfederpaket (8) im Ringspannkolben (7) gelagert ist.

5. Steckspannkupplung nach einem der Ansprüche 1 bis 4, **dadurch gekennzeichnet, dass** zur Aufnahme der Spannkugeln (10) im Ringspannkolben (7) eine Ringkammer (22) eingearbeitet ist.

6. Steckspannkupplung nach einem der Ansprüche 1 bis 5, **dadurch gekennzeichnet, dass** die Schliesskolbenbüchse (14) durch eine Schulter (38) in der Endstellung begrenzt ist.

7. Steckspannkupplung nach einem der Ansprüche 1 bis 6, **dadurch gekennzeichnet, dass** das Gehäuse (1) durch einen O-Ring (23) über die Bohrung (24) der Kugelspannbüchse (4) und der Schliesskolbenbüchse (14) abgedichtet ist.

8. Steckspannkupplung nach einem der Ansprüche 1 bis 7, **dadurch gekennzeichnet, dass** der Spannzapfen (12) in der Zentrierbohrung (2) im Gehäuse (1) im gekuppelten Zustand positioniert ist.

9. Steckspannkupplung nach einem der Ansprüche 1 bis 8, **dadurch gekennzeichnet, dass** die Andockplatte (13) der Andockeinheit mit dem Spannzapfen (12) verbunden ist, und die Stirnfläche der Andockplatte (13) einen Anschlag zum Gehäuse (1) bildet.

10. Steckspannkupplung nach einem der Ansprüche 1 bis 9, **dadurch gekennzeichnet, dass** das Gehäuse (1) und der Abschlussdeckel (5) Luftanschlüsse (29, 30) aufweisen.

## Claims

1. Socket clamping coupler for tightening a docking unit, with a housing (1) that contains a centring hole (2), a cylinder bore (17) and an offset bore (3), in which a ball spring collet (4) is pushed in with ball clamping holes (11) arranged in a circle for clamping balls (10), and is centred and connected on the back with an end plate (5), which gives rise to a closed cylindrical space (6) in which an annular tension piston (7), with an integrated compression spring packet (8) as the driving instrument, is stored floating, whereby the annular tension piston (7) can be pressed into the upper end position when compressed air is discharged, and this results in the compression spring packet (8) preloading onto the closing force, and when the compressed air is disconnected, the closing force is activated and thereby positively connects a clamping cog to be coupled (12) of a docking plate (13) of the docking unit with a cone (21) at the annular tension piston (7) via the clamping balls (10) with the housing (1); with a locking piston bushing (14), whereby the locking piston bushing (14) is lockable with a groove (25) in a decoupled and unpressurised state by the closing force of a lock spring (15) and the facet (31) at the cone (21) of the annular tension piston (7) and the clamping balls (10), and the locking piston bushing (14) can be pushed in a decoupled and compressed air-discharged state through a preloaded lock spring (15) in the borehole (24) of the ball spring collet (4), and the clamping balls (10) are thereby secured.

2. Socket clamping coupler according to claim 1, designated by the fact that the annular tension piston (7) is stored and sealed in the annular cylindrical space (6) via O-rings (19,20,26).

3. Socket claimping coupler according to claim 1 or 2, designated by the fact that the floating annular tension piston (7) transfers the clamping force via the cone (21) and the clamping balls (10) concentrically to the clamping cog (12).

4. Socket clamping coupler according to one of claims 1 to 3, designated by the fact that the compression spring packet (8) is stored in the annular tension piston (7).

5. Socket clamping coupler according to one of claims 1 to 4, designated by the fact that a ring chamber (22) is incorprated in the annular tension piston (7) for taking up the clamping balls (10).

6. Socket clamping coupler according to one of claims 1 to 5, designated by the fact that the locking piston bushing (14) is bounded in the end position by a collar (38).

7. Socket clamping coupler according to one of claims 1 to 6, designated by the fact that the housing (1) is sealed by an O-ring (23) via the borehole (24) of the ball spring collet (4) and the locking piston bushing (14).

8. Socket clamping coupler according to one of claims 1 to 7, designated by the fact that the clamping cog (12) in the centring hole (2) in the housing (1) is positioned in a coupled state.

9. Socket clamping coupler according to one of claims 1 to 8, designated by the fact that the docking plate (13) of the docking unit is connected to the clamping cog (12), and the end face of the docking unit (13) forms an end stop to the housing (1).

10. Socket clamping coupler according to one of claims 1 to 9, designated by the fact that the housing (1) and the end plate (5) contain air connectors (29,30).

## Revendications

1. Couplage de serrage enfichable pour serrer une unité d'arrimage, muni d'un boîtier (1) qui présente un alésage de centrage (2), un alésage du cylindre (17) ainsi qu'un alésage en décalage (3), dans lesquels est insérée une douille de serrage à billes (4), avec des alésages de serrage à billes (11) pour des billes de serrage (10) disposés dans le cercle, douille qui est centrée et raccordée au dos par un couvercle (5), ce qui résulte en un espace cylindrique (6) fermé, dans lequel est logé de manière flottante un piston de serrage annulaire (7) avec un paquet de ressorts de pression intégré (8) en tant qu'organe de commande, le piston de serrage annulaire (7) pouvant être comprimé en position supérieure par une admission d'air comprimé, et le paquet de ressorts de pression (8) pouvant ainsi être précontraint par la force de serrage, et la force de serrage, lors de l'arrêt de l'air comprimé, activant et raccordant ainsi par conjonction de forme un tenon de serrage (12) à coupler d'une plaque d'arrimage (13) de l'unité d'arrimage avec un cône (21) sur le piston de serrage annulaire (7) à l'aide des billes de serrage (10) avec le boîtier (1) ; muni d'une douille de piston de fermeture (14), la douille de piston de fermeture (14) avec une rainure (25) étant verrouillable à l'état découplé et sans pression par la pression de serrage d'un ressort de serrage (15) et de la facette (31) sur le cône (21) du piston de serrage annulaire (7) et des billes de serrage (10), et la douille de piston de fermeture (14) pouvant être coulissée à l'état découplé et contraint par l'air comprimé par un ressort de serrage (15) précontraint dans l'alésage (24) de la douille de serrage à billes (4) et les billes de serrage (10) étant ainsi bloquées.

2. Couplage de serrage enfichable selon la revendication 1, **caractérisé en ce que** le piston de serrage annulaire (7) est logé et étanchéifié dans l'espace annulaire cylindrique (6) à l'aide de joints toriques (19, 20, 26).

3. Couplage de serrage enfichable selon la revendication 1 ou 2, **caractérisé en ce que** le piston de serrage annulaire (7) flottant transmet la force élastique de manière concentrique au tenon de serrage (12) à l'aide du cône (21) et des billes de serrage (10).

4. Couplage de serrage enfichable selon l'une des revendications 1 à 3, **caractérisé en ce que** le paquet de ressorts de pression (8) est logé dans le piston de serrage annulaire (7).

5. Couplage de serrage enfichable selon l'une des revendications 1 à 4, **caractérisé en ce qu'**une chambre toroïdale (22) est enfoncée/insérée dans le piston de serrage annulaire (7) pour le logement des billes de serrage (10).

6. Couplage de serrage enfichable selon l'une des revendications 1 à 5, **caractérisé en ce que** la douille de piston de fermeture (14) est limitée par un épaulement (38) en position finale.

7. Couplage de serrage enfichable selon l'une des revendications 1 à 6, **caractérisé en ce que** le boîtier (1) est étanchéifié par un joint torique (23) au-dessus de l'alésage (24) de la douille de serrage à billes (4) et de la douille de piston de fermeture (14).

8. Couplage de serrage enfichable selon l'une des revendications 1 à 7, **caractérisé en ce que** le tenon de serrage (12) est positionné dans l'alésage de centrage (2) dans le boîtier (1) à l'état couplé.

9. Couplage de serrage enfichable selon l'une des revendications 1 à 8, **caractérisé en ce que** la plaque d'arrimage (13) de l'unité d'arrimage est raccordée au tenon de serrage (12), et que la surface frontale de l'unité d'arrimage (13) forme une butée par rapport au boîtier (1).

10. Couplage de serrage enfichable selon l'une des revendications 1 à 9, **caractérisé en ce que** le boîtier (1) et le couvercle (5) présentent des prises d'air (29, 30).
